# EUROPÄISCHE PATENTANMELDUNG

(11) **EP 2 562 735 A1**
(43) Veröffentlichungstag der Anmeldung: **27.02.2013**
(21) Anmeldenummer: 12173971.8
(22) Anmeldetag: 28.06.2012
(51) Int. Cl.: G08G 1/16, H04N 7/18, G06K 9/00, G08G 1/04

(54) **Verfahren und Vorrichtung zur Analysierung eines von einem Fahrzeug zu befahrenden Streckenabschnitts**

(30) Priorität: 26.08.2011 DE 102011081614
(71) Anmelder: ROBERT BOSCH GMBH, 70442 Stuttgart (DE)
(72) Erfinder: Ebert, Dominik, 31134 Hildesheim (DE)

(57) **Zusammenfassung**

Die Erfindung betrifft ein Verfahren zur Analysierung eines von einem Fahrzeug zu befahrenen Streckenabschnitts. Dabei wird in einem Schritt des Bestimmens (235) einer Gefahrenstelle in dem von dem Fahrzeug zu befahrenden Streckenabschnitt durchgeführt, unter Verwendung von Bilddaten, die von einer fahrzeugexternen Einrichtung ausgesendete und über eine Fahrzeugschnittstelle empfangene Daten repräsentieren.

## Beschreibung

### Stand der Technik

Die vorliegende Erfindung bezieht sich auf ein Verfahren zur Analysierung eines von einem Fahrzeug zu befahrenden Streckenabschnitts, auf eine entsprechende Vorrichtung sowie auf ein entsprechendes Computerprogrammprodukt.

Fahrerassistenzsysteme werden in einem Fahrzeug eingesetzt, um den Fahrer bei der Führung des Fahrzeugs zu unterstützen und vor Gefahren zu warnen.

Die DE 10 2007 044 536 A1 beschreibt eine Vorrichtung zum Überwachen der Umgebung eines Kraftfahrzeugs.

### Offenbarung der Erfindung

Vor diesem Hintergrund wird mit der vorliegenden Erfindung ein Verfahren zur Analysierung eines von einem Fahrzeug zu befahrenden Streckenabschnitts, weiterhin eine Vorrichtung, die dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Ein System zur Warnung vor sich auf einer Straße befindlichen Gefahren kann ausgebildet sein, um Foto- oder Videoaufnahmen der Straße oder der Umgebung der Straße auszuwerten. Dazu können von einer oder mehreren im Fahrzeug verbauten Kamera, beispielsweise einer Infrarotkamera oder einer im sichtbaren Farbspektrum arbeitenden Kamera, Bildinformationen bezogen und mittels geeigneter Bildverarbeitungsverfahren ausgewertet werden. Zusätzlich oder alternativ können Bildinformationen von einer fahrzeugexternen Einrichtung bezogen und mittels geeigneter Bildverarbeitungsverfahren ausgewertet werden. Wird eine Gefahr, zum Beispiel ein Fußgänger auf der Fahrbahn, entdeckt, so kann eine Warnung generiert werden und an den Fahrer des Fahrzeugs ausgegeben werden. Beispielsweise kann der Fahrer die Warnung in Form eines akustischen Signals oder in Form einer farblichen Markierung der Gefahrenstelle auf einem Display erhalten.

Ferner kann eine Information über eine geplante Route genutzt werden, um den Fahrer zu warnen. Dabei können im Navigationssystem gespeicherte Karteninformationen ausgewertet und zur Warnung genutzt werden. Die Karteninformationen können in Kombination mit weiteren im Fahrzeug erfassten Daten genutzt werden. Solche weiteren Daten können z. B. die Geschwindigkeit des Fahrzeugs betreffen. Beispielweise kann der Fahrer eines Fahrzeugs eine Warnung erhalten, wenn er sich mit überhöhter Geschwindigkeit einer Haarnadelkurve nähert.

Um ein sogenanntes Street Warning - System zur Warnung vor Gefahrenstellen und Hindernissen auf Basis von über Bild-Datendienste und zusätzlich oder alternativ von über Video-Datendienste bezogenen Straßeninformationen zu schaffen, kann ein entsprechendes System über eine geeignete Schnittstelle Foto- und/oder Videoaufnahmen der auf einer geplanten Route des Fahrzeugs liegenden Orte beziehen. Die bezogenen Bildinformationen können mit einem geeigneten Bildverarbeitungsverfahren auf mögliche Gefahrenstellen oder Hindernisse geprüft werden. Wird durch Ausführung des Bildverarbeitungsverfahrens eine Gefahrenstelle oder ein Hindernis entdeckt, so kann eine Warnung an den Fahrer des Fahrzeugs erfolgen.

Dabei können historische Aufnahmen oder Live-Aufnahmen von Straßen und anderen Orten ausgewertet werden, mit dem Ziel, mögliche Gefahrenstellen oder Hindernisse zu entdecken und den Fahrer vor diesen zu warnen.

Die vorliegende Erfindung schafft ein Verfahren zur Analysierung eines von einem Fahrzeug zu befahrenen Streckenabschnitts, das folgenden Schritt umfasst: Bestimmen einer Gefahrenstelle in dem von dem Fahrzeug zu befahrenen Streckenabschnitt unter Verwendung von Bilddaten, die von einer fahrzeugexternen Einrichtung ausgesendete und über eine Fahrzeugschnittstelle empfangene Daten repräsentieren.

Bei dem Fahrzeug kann es sich beispielsweise um einen Personenkraftwagen oder einen Lastkraftwagen handeln. Bei dem Streckenabschnitt kann es sich um eine geplante oder zukünftig zu befahrende Route des Fahrzeugs von einem Ausgangspunkt zu einem Zielpunkt handeln. Bei dem Streckenabschnitt kann es sich auch um einen unmittelbar, beispielsweise einige Meter oder Kilometer, in Fahrtrichtung vor dem Fahrzeug angeordneten Abschnitt einer zu befahrenden Strecke handeln. Bei der Strecke kann es sich um eine Straße oder Fahrbahn handeln. Der Streckenabschnitt kann analysiert werden, um mögliche Gefahrenstellen innerhalb des Streckenabschnitts zu finden. Eine Gefahrenstelle kann sich auf, neben, unter- oder oberhalb des Streckenabschnitts befinden. Beispielsweise kann eine Gefahrenstelle ein Hindernis sein, das sich auf der Fahrbahn befindet. Auch kann eine Gefahrenstelle eine Unterbrechung der Fahrbahn, beispielsweise infolge einer Baustelle, sein. Ferner kann eine Gefahrenstelle durch ein Umfeld des Straßenabschnitts, beispielsweise einer keinen Windschutz bietenden Freifläche, gebildet sein. Eine mögliche Gefahrenstelle kann für hohe Fahrzeuge auch eine Brücke darstellen, die die Fahrbahn überquert. Auch kann eine Gefahrenstelle durch einen Verlauf des Streckenabschnitts gebildet werden. Darunter können beispielsweise eine enge oder nicht einsehbare Kurve, eine Geländekuppe oder ein starkes Gefälle fallen. Eine unter normalen Verhältnissen keine Gefahr darstellende Stelle des Streckenabschnitts kann unter besonderen Umständen zu einer Gefahrenstelle werden. Basierend auf den Bilddaten können solche potentiellen Gefahrenstellen, beispielsweise eine möglicherweise vereiste Brücke, bestimmt werden. In einem Schritt des Auswertens können die Bilddaten ausgewertet werden, um die Gefahrenstelle zu bestimmen. Zur Auswertung der Bilddaten können geeignete Bildauswerteverfahren eingesetzt werden. Die Bilddaten können zumindest einen Bereich des Streckenabschnitts grafisch abbilden. Bei den Bilddaten kann es sich um Fotos oder Filme handeln. Die Bilddaten können nicht ausgewertete Rohdaten sein. Die Bilddaten können aktuell sein, das heißt beispielsweise in einem lediglich einige Sekunden oder Minuten zurückreichenden Zeitraum von einer Bilderfassungseinrichtung erfasst worden sein. Auch kann es sich bei den Bilddaten um ältere Bilddaten handeln, die beispielsweise in einem einige Tage, Wochen oder Monate zurückreichenden Zeitraum von einer Bilderfassungseinrichtung erfasst worden sind. Bei den Bilddaten kann es sich um Daten handeln, die von einer Bilderfassungseinrichtung eines Fahrzeugs erfasst wurden, das den Streckenabschnitt in der Vergangenheit befahren hat. Auch kann es sich bei den Bilddaten um Daten handeln, die von einer stationäre in Bereich der Streckenabschnitt angeordneten Bilderfassungseinrichtung erfasst wurden. Ferner kann es sich bei den Bilddaten um Daten handeln, die aus der Luft, beispielsweise von einem Fluggerät oder einem Satelliten erfasst wurden. Die Bilddaten können in der fahrzeugexternen Einrichtung gespeichert sein. Den Bilddaten können Positionsdaten zugeordnet sein, die es ermöglichen, die Bilddaten den Streckenabschnitt zuzuordnen. Die fahrzeugexterne Einrichtung kann stationär, beispielsweise in einem Gebäude, angeordnet sein. Die fahrzeugexterne Einrichtung kann als Server fungieren, der eine Vielzahl von Bilddaten gespeichert hat und ausgebildetes, um Bilddaten an das Verfahren umsetzende Vorrichtungen auszusenden. Auch kann die fahrzeugexterne Einrichtung eine Sendeeinrichtung sein, die beispielsweise über eine weitere Schnittstelle mit einem Server verbunden ist. Bei der Fahrzeugschnittstelle kann es sich um eine drahtlose Empfangsschnittstelle handeln, über die die von der fahrzeugexternen Einrichtung ausgesendeten Bilddaten empfangene empfangen werden können. Bei der Fahrzeugschnittstelle kann es sich um eine zentrale Schnittstelle des Fahrzeugs oder um eine Schnittstelle eines Assistenzsystems des Fahrzeugs handeln.

Gemäß einer Ausführungsform kann im Schritt des Bestimmens unter Verwendung der Bilddaten ein Verlauf einer Fahrbahn des zu befahrenden Streckenabschnitts ermittelt werden, um die Gefahrenstelle zu bestimmen. Um den Verlauf der Fahrbahn zu bestimmen kann beispielsweise eine Luftaufnahme des Streckenabschnitts ausgewertet werden. Mittels eines geeigneten Verfahrens kann zunächst die Fahrbahn in den Bilddaten erkannt werden. Anschließend kann ein Verlauf der Fahrbahn beispielsweise mit vorgegebenen Fahrbahnverläufen verglichen werden, um eine Gefahrenstelle, beispielsweise eine enge Kurve, zu bestimmen. Um den Verlauf der Fahrbahn zu ermitteln können spezielle Bilddaten, wie Luftaufnahmen angefordert werden, aus denen der Verlauf der Fahrbahn ermittelt werden kann. Alternativ oder zusätzlich kann im Schritt des Bestimmens unter Verwendung der Bilddaten ein sich in dem Streckenabschnitt befindliches Objekt ermittelt werden, um die Gefahrenstelle zu bestimmen. Bei dem Objekt kann es sich um ein Hindernis, beispielsweise ein auf der Fahrbahn stehendes Fahrzeug, handeln. Um das Objekt zu bestimmen, können beispielsweise von einer Kamera eines weiteren Fahrzeugs oder von einer an einem Verkehrsleitsystem angeordneten Kamera erfasste Aufnahmen des Streckenabschnitts ausgewertet werden. Mittels eines geeigneten Verfahrens kann zunächst das sich in dem Streckenabschnitt befindliche Objekt detektiert werden. Mit einer Objekterkennung oder Objektklassifizierung kann das detektierte Objekt als eine Gefahrenstelle oder als keine Gefahrenstelle eingestuft werden. Beispielsweise kann das detektierte Objekt mit Vergleichsobjekten verglichen werden, um zu bestimmen, ob es sich bei dem detektierten Objekt um eine Gefahrenstelle handelt. Zur Einstufung des detektierten Objekts können zusätzlich Sensordaten oder Messwerte verwendet werden, die von einer Einrichtung des Fahrzeugs ermittelt wurde. Solche Sensordaten oder Messwerte können beispielsweise eine Relativgeschwindigkeit oder einen Abstand zwischen dem Fahrzeug und dem detektierten Objekt sowie eine Größe des detektierten Objekts betreffen.

Im Schritt des Bestimmens kann die Gefahrenstelle ferner unter Verwendung von Fahrzeugdaten bestimmt werden. Die Fahrzeugdaten können von einer fahrzeuginternen Einrichtung erfasste Daten repräsentieren. Beispielsweise können die Daten von einem Sensor oder einer Umfelderfassungseinrichtung des Fahrzeugs erfasste Daten repräsentieren. Die Fahrzeugdaten können beispielsweise eingesetzt werden, um in den Bilddaten enthaltene Bildinformationen auszuwerten, zu bewerten oder zu plausibilisieren. Auch kann eine aufgrund der Bilddaten als potentielle Gefahrenstelle erkannte Stelle unter Verwendung der Fahrzeugdaten als aktuell gefährliche oder als aktuell ungefährliche Gefahrenstelle eingestuft werden. Somit können die Fahrzeugdaten verwendet werden, um eine basierend auf den Bilddaten erkannte Gefahrenstelle als solche zu verifizieren.

Die Fahrzeugdaten können Bewegungsdaten des Fahrzeugs umfassen. Beispielsweise können die Bewegungsdaten eine Geschwindigkeit oder eine Fahrtrichtung des Fahrzeugs umfassen. Die Geschwindigkeit kann beispielsweise verwendet werden, um einen als potentiell gefährlich eingestuften Verlauf der Fahrbahn als aufgrund der aktuellen Geschwindigkeit als gefährlich oder als ungefährlich einzustufen. Auch können die Fahrzeugdaten Witterungsdaten über eine im Umfeld des Fahrzeugs herrschende Witterung umfassen. Beispielsweise können die Witterungsdaten eine Temperatur, eine Bewertung der Sichtweite oder eine Bewertung der Fahrbahnbeschaffenheit, wie glatt, rutschig oder griffig, umfassen. Die Temperatur kann beispielsweise verwendet werden, um einen aufgrund einer möglichen Vereisung als potentiell gefährlich eingestuften Streckenabschnitt als aufgrund der aktuellen Temperatur als gefährlich oder als ungefährlich einzustufen.

Das Verfahren kann einen Schritt des Plausibilisierens der Bilddaten umfassen, um plausibilisierte Bilddaten zu erhalten. Im Schritt des Bestimmens kann die Gefahrenstelle unter Verwendung der plausibilisierten Bilddaten bestimmt werden. Durch den Schritt des Plausibilisierens können beispielsweise veraltete Bilddaten oder fälschlicherweise nicht dem zu befahrenden Streckenabschnitt zugeordnete Bilddaten erkannt und entfernt werden. Auf diese Weise kann vermieden werden, dass aufgrund veralteter oder falscher Bilddaten fälschlicherweise eine Gefahrenstelle bestimmt wird. Die Bilddaten können beispielsweise durch einen Vergleich mehrerer zu dem zu befahrenden Streckenabschnitt vorhandenen Bilddaten, unter Verwendung von gespeicherten Streckendaten eines Navigationssystems oder unter Verwendung von Fahrzeugdaten plausibilisiert werden. Auch kann im Schritt des Plausibilisierens eine im Schritt des Bestimmens bestimmte Gefahrenstelle plausibilisiert werden. Werden Bilddaten oder eine Gefahrenstelle als nicht plausibel eingestuft, so können weitere Bilddaten zur weiteren Überprüfung der Gefahrenstelle angefordert werden.

Beispielsweise kann der Schritt des Plausibilisierens unter Verwendung eines Aufnahmezeitpunkts der Bilddaten durchgeführt werden. Abhängig davon, wie lange der Aufnahmezeitpunkt bereits zurückliegt, kann eine im Schritt des Bestimmens bestimmte Gefahrenstelle als solche beibehalten werden oder als Gefahrenstelle verworfen werden. So kann eine im Schritt des Bestimmens bestimmte Gefahrenstelle mit einer typischen Bestandsdauer versehen werden. Eine durch eine Person gebildete Gefahrenstelle weist typischerweise eine kürzere Bestandsdauer als eine Baustelle auf, die typischerweise wiederum eine kürzere Bestandsdauer als eine enge Kurve aufweist. Im Schritt des Plausibilisierens kann der Aufnahmezeitpunkt mit der Bestandsdauer verglichen werden. Liegt der Aufnahmezeitpunkt bereits länger als der durch die Bestanddauer definierte Zeitraum zurück, so kann die Gefahrenstelle als nicht plausibel eingestuft und verworfen werden.

Das Verfahren kann einen Schritt des Ermittelns von Positionsdaten bezüglich des zu befahrenden Streckenabschnitts umfassen. Ferner kann das Verfahren einen Schritt des Aussendens einer auf den Positionsdaten basierenden Anfrage nach den Positionsdaten zugeordneten Bilddaten über die Fahrzeugschnittstelle umfassen. Ferner kann das Verfahren einen Schritt des Empfangens der Bilddaten über die Fahrzeugschnittstelle umfassen. Die Positionsdaten können beispielsweise eine aktuelle Position des Fahrzeugs und eine voraussichtliche zukünftige Position des Fahrzeugs umfassen. Die zukünftige Position kann unter Verwendung einer Straßenkarte und einer aktuellen Fahrtrichtung ermittelt werden. Auch kann die zukünftige Position basierend auf einer berechneten Route zu einem Fahrtziel des Fahrzeugs ermittelt werden. Durch die Positionsdaten kann der zu befahrene Streckenabschnitt definiert werden. Die Positionsdaten können von einem Navigationssystem ermittelt werden. Die Anfrage kann an die fahrzeugexterne Einrichtung adressiert sein. Die Anfrage kann geeignet sein, um die fahrzeugexterne Einrichtung zu veranlassen, den Positionsdaten zugeordnete Bilddaten zu suchen und auszusenden. Auf diese Weise können stets aktuell benötigte oder in absehbarer Zukunft benötigte Bilddaten angefordert werden.

Das Verfahren kann einen Schritt des Erzeugens eines Gefahrensignals zur Darstellung der Gefahrenstelle mittels einer Mensch-Maschine-Schnittstelle, basierend auf der Gefahrenstelle, umfassen. Das Gefahrensignal kann ausgebildet sein, um eine akustische Warnung vor der Gefahrenstelle über einen Lautsprecher auszugeben. Auch kann das Gefahrensignal ausgebildet sein, um eine Anzeige der Gefahrenstelle auf einem Bildschirm zu bewirken. Zusätzlich oder alternativ kann das Verfahren einen Schritt des Erzeugens eines Steuersignals zur Steuerung einer Fahrfunktion des Fahrzeugs, basierend auf der Gefahrenstelle, umfassen. Die Fahrfunktion kann beispielsweise eine Geschwindigkeit oder eine Lenkung des Fahrzeugs umfassen. Beispielsweise kann das Steuersignal ausgebildet sein, um eine Reduzierung der Geschwindigkeit oder eine Durchführung einer Lenkbewegung zu veranlassen.

Die vorliegende Erfindung schafft ferner eine Vorrichtung zur Analysierung eines von einem Fahrzeug zu befahrenen Streckenabschnitts, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden. Die Vorrichtung kann Teil des Fahrzeugs sein, mit dem Fahrzeug über zumindest eine Schnittstelle verbunden sein oder getrennt von dem Fahrzeug angeordnet sein und betrieben werden, beispielsweise um eine bevorstehende Fahrt des Fahrzeugs planen zu können.

Unter einer Vorrichtung kann vorliegend ein elektrisches Gerät verstanden werden, das Sensorsignale verarbeitet und in Abhängigkeit davon Steuersignale ausgibt. Beispielsweise kann die Vorrichtung als ein Navigationsgerät, ein Informationssystem oder ein aktives oder passives Sicherheitssystem realisiert sein. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1: ein schematische Darstellung eines Fahrzeugs gemäß einem Ausführungsbeispiel der vorliegenden Erfindung; und
- Fig. 2: ein Ablaufdiagramm eines Verfahrens gemäß einem Ausführungsbeispiels der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

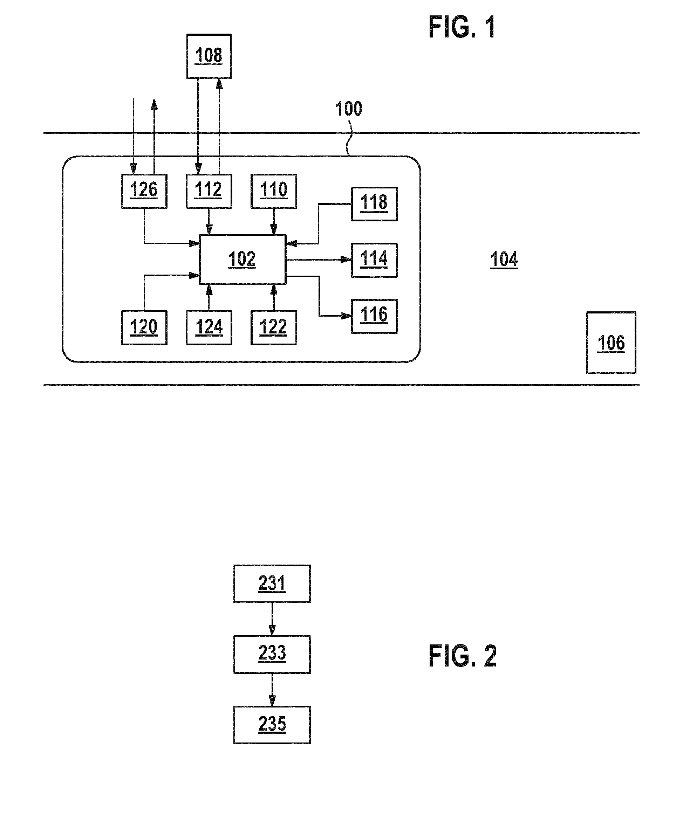

Fig. 1 zeigt eine schematische Darstellung eines Fahrzeugs 100 mit einer Vorrichtung 102 zur Analysierung eines von dem Fahrzeug 100 zu befahrenen Streckenabschnitts 104, gemäß einem Ausführungsbeispiel der vorliegenden Erfindung. Der Streckenabschnitt 104 ist Teil einer Straße, auf der sich das Fahrzeug 100 bewegt. Innerhalb des Streckenabschnitts 104 befindet sich eine Gefahrenstelle 106. Die Gefahrenstelle 106 befindet sich in Fahrtrichtung des Fahrzeugs 100 vor dem Fahrzeug 100. Das Fahrzeug 100 bewegt sich somit auf die Gefahrenstelle 106 zu. Die Vorrichtung 102 ist in dem Fahrzeug 100 angeordnet und ist ausgebildet, um durch die Analysierung des Streckenabschnitts 104 die Gefahrenstelle 106 zu erkennen. Die Vorrichtung 102 ist ausgebildet, um den Streckenabschnitt 104 mithilfe von Bilddaten zu analysieren, die der Vorrichtung 102 von einer fahrzeugexternen Einrichtung 108 bereitgestellt werden. Die fahrzeugexterne Einrichtung 108 ist entfernt von dem Fahrzeug 100 angeordnet. Die Vorrichtung 102 und die fahrzeugexterne Einrichtung 108 beziehungsweise das Fahrzeug 100 und die fahrzeugexterne Einrichtung 108 können über eine drahtlose Schnittstelle miteinander gekoppelt sein.

Gemäß diesem Ausführungsbeispiel weist das Fahrzeug 100 ein Navigationssystem 110 auf, dass ausgebildet ist, um den Streckenabschnitt 104 definierende Positionsdaten zu ermitteln und über eine Schnittstelle an die Vorrichtung 100 bereitzustellen. Die Vorrichtung 100 ist ausgebildet, um basierend auf den Positionsdaten eine Anfrage nach dem Streckenabschnitt 104 zugeordneten Bilddaten an die fahrzeugexterne Einrichtung 108 zu generieren und an eine Fahrzeugschnittstelle 112 auszugeben. Die Fahrzeugschnittstelle 112 ist ausgebildet, um die Anfrage drahtlos an die fahrzeugexterne Einrichtung 108 zu übermitteln. Dazu kann die Fahrzeugschnittstelle 112 eine geeignete Antenne umfassen.

Die fahrzeugexterne Einrichtung 108 ist ausgebildet, um die Anfrage zu empfangen und da den Positionsdaten entsprechenden Bilddaten zu suchen. Die fahrzeugexterne Einrichtung 108 kann einen Speicher umfassen, in dem eine Vielzahl von Bilddaten gespeichert ist. Die fahrzeugexterne Einrichtung 108 kann ausgebildet sein, um Anfragen einer Mehrzahl von Fahrzeugen 100 zu empfangen und zu bearbeiten. Sofern sich in der fahrzeugexternen Einrichtung 108 oder in einer Einrichtung, auf die die fahrzeugexterne Einrichtung 108 Zugriff hat, Bilddaten befinden, die sich auf den Streckenabschnitt 104 beziehen, ist die fahrzeugexterne Einrichtung 118 ausgebildet, um die sich auf den Streckenabschnitt 104 beziehenden Bilddaten über eine drahtlose Schnittstelle auszusenden. Alternativ kann die Vorrichtung 102 ausgebildet sein, um die fahrzeugexterne Einrichtung 108 mittels der Anfrage über die Fahrzeugschnittstelle 112 nach sich auf den Streckenabschnitt 104 beziehenden Bilddaten zu durchsuchen und diese aus der fahrzeugexternen Einrichtung 108 auszulesen.

Die Fahrzeugschnittstelle 112 ist ausgebildet, um die von der fahrzeugexternen Einrichtung 108 ausgesendeten Bilddaten zu empfangen und über eine Schnittstelle an die Vorrichtung 102 auszugeben. Die Vorrichtung 102 ist ausgebildet, um die Bilddaten hinsichtlich eines Hinweises auf eine Gefahrenstelle, wie die Gefahrenstelle 106, auszuwerten. Dazu kann die Vorrichtung 102 ausgebildet sein, um geeignete Bildauswertungsverfahren durchzuführen. Hat sich aus der Auswertung der Bilddaten ein Hinweis auf die Gefahrenstelle 106 ergeben, so ist die Vorrichtung 102 ausgebildet, um ein Warnsignal zu erzeugen, um einen Fahrer des Fahrzeugs 100 vor der Gefahrenstelle 106 zu warnen. Gemäß diesem Ausführungsbeispiel ist die Vorrichtung 102 ausgebildet, um das Warnsignal über eine Schnittstelle an eine Anzeigeeinrichtung 114 zur grafischen Anzeige einer Warnung vor der Gefahrenstelle 106 auszugeben. Alternativ oder zusätzlich ist die Vorrichtung 102 ausgebildet, um ein Steuersignal zu erzeugen und an eine Steuerung 116 eigener Betriebsfunktion des Fahrzeugs 100 auszugeben. Beispielsweise kann die Steuerung 116 ausgebildet sein, um eine Geschwindigkeit des Fahrzeugs 100 zu regulieren. Das Steuersignal kann ausgebildet sein, die Steuerung 116 dazu zu veranlassen, die Geschwindigkeit des Fahrzeugs 100 zu reduzieren, um ein gefahrloses Passieren der Gefahrenstelle durch das Fahrzeug 100 zu ermöglichen.

Die Vorrichtung 102 ist gemäß diesem Ausführungsbeispiel ausgebildet, um die Bilddaten zu plausibilisieren. Dazu kann die Vorrichtung 102 ausgebildet sein, um aktuelle Bilddaten einer Kamera 118 des Fahrzeugs 100 über eine Schnittstelle zu empfangen. Die Kamera 108 kann ausgebildet sein, um zumindest einen Abschnitt des Streckenabschnitts 104 zu erfassen. Zur Plausibilisierung der Bilddaten kann die Vorrichtung 102 ausgebildet sein, um die Bilddaten mit den aktuellen Bilddaten der Kamera 108 zu vergleichen. Ferner kann die Vorrichtung 102 ausgebildet sein, um eine aktuelle Uhrzeit von einer Uhr 120 über eine Schnittstelle zu empfangen. Die aktuelle Uhrzeit ermöglicht es der Vorrichtung 102 in Verbindung mit einem bekannten Aufnahmezeitpunkt der Bilddaten zu ermitteln, wie lange der Aufnahmezeitpunkt der Bilddaten bereits zurückliegt. Der Aufnahmezeitpunkt der Bilddaten kann von den Bilddaten umfasst sein oder zusammen mit den Bilddaten von der fahrzeugexternen Einrichtung 108 übermittelt worden sein.

Die Vorrichtung 102 kann auch ausgebildet sein, um die aktuellen Bilddaten der Kamera 118 zusätzlich zu den Bilddaten der fahrzeugexternen Einrichtung 108 zu verwenden, um einen Hinweis auf die Gefahrenstelle 106 zu bestimmen. Ferner kann die Vorrichtung 102 ausgebildet sein, um den Hinweis auf die Gefahrenstelle 106 ferner basierend auf Bewegungsdaten des Fahrzeugs 100, beispielsweise eine Geschwindigkeit des Fahrzeugs 100, sowie Umfelddaten zu bestimmen. Dazu kann die Vorrichtung 102 ausgebildet sein, um die Bewegungsdaten und zusätzlich oder alternativ die Umfelddaten mit den Bilddaten oder mit einem aus den Bilddaten gewonnenen Hinweis auf eine potentielle Gefahrenstelle zu kombinieren, um einen Hinweis auf die Gefahrenstelle 106 zu bestimmen. Die Vorrichtung 102 kann eine Schnittstelle zu einer Einrichtung 122 und einer Einrichtung 124 aufweisen. Die Einrichtung 122 kann beispielsweise eine Messeinrichtung sein, die ausgebildet ist, um die Geschwindigkeit des Fahrzeugs zu erfassen. Die Einrichtung 124 kann ein Sensor sein, beispielsweise ein Temperatursensor zur Erfassung einer Temperatur der das Fahrzeug 100 umgebenden Luft. Ferner kann die Vorrichtung 102 ausgebildet sein, um basierend auf den aktuellen Bilddaten der Kamera 118 Umfelddaten zu erzeugen. Beispielsweise kann die Vorrichtung 102 ausgebildet sein, um basierend auf den aktuellen Bilddaten eine Sichtweite oder eine Straßenzustand der Straße in dem Streckenabschnitt 104 zu bestimmen. Ferner kann die Vorrichtung 102 ausgebildet sein, um Umfelddaten, beispielsweise einen Wetterbericht, über eine Sende- und Empfangsschnittstelle 126 von einer weiteren fahrzeugexternen Einrichtung zu empfangen.

Fig. 2 zeigt ein Ablaufdiagramm eines Verfahrens zur Analysierung eines von einem Fahrzeug zu befahrenen Streckenabschnitts, gemäß einem Ausführungsbeispiel der vorliegenden Erfindung. Das Verfahren kann beispielsweise von der in Fig. 1 gezeigten Vorrichtung oder einem anderen innerhalb eines Fahrzeugs angeordneten geeigneten Gerät umgesetzt werden.

In einem Schritt 231 wird ein von dem Fahrzeug zu befahrener Streckenabschnitt bestimmt. Dazu können beispielsweise Daten eines Navigationssystems herangezogen werden. In einem Schritt 233 wird über eine drahtlose Schnittstelle auf eine fahrzeugexterne Einrichtung zugegriffen, um von dieser Bildinformation bezüglich des zu befahrenden Streckenabschnitts zu empfangen oder diese nach Bildinformation bezüglich des zu befahrenden Streckenabschnitts zu durchsuchen. In einem Schritt 235 werden die erhaltenen Bildinformationen ausgewertet, um eine Gefahrenstelle in dem von dem Fahrzeug zu befahrenen Streckenabschnitt zu bestimmen.

Im Folgenden wird anhand der Figuren 1 und 2 zusammenfassend eine Funktionsweise eines Systems gemäß einem Ausführungsbeispiel beschrieben. Das System kann beispielsweise die in Fig. 1 gezeigte Vorrichtung 102 umfassen und/oder ausgebildet sein, um das in Fig. 2 gezeigte Verfahren umzusetzen.

Das System ist ausgebildet, um aus dem Navigationsgerät 110 des Fahrzeugs 100 Informationen über den voraussichtlichen Verlauf der Strecke 104, die ein Fahrer mit dem Fahrzeug 100 zurücklegen wird, zu beziehen. Das System ist ferner ausgebildet, um über eine geeignete Schnittstelle 112, z. B. WLAN oder UMTS-Netz, eine Verbindung zum Internet herzustellen und dieses auf Bilder oder Videoinformationen entlang des geplanten Streckenverlaufs 104 zu durchsuchen. Hierzu werden insbesondere Dienste genutzt, die den Zugang zu Stra-βenbildern, Satellitenaufnahmen oder Echtzeitvideodaten von Webcams ermöglichen.

Über den Bildern oder Videos zugeordnete Geoinformationen, z. B. Lagekoordinaten oder Straßennamen, erfolgt eine Zuordnung zu bestimmten Streckenabschnitten, also gemäß diesem Ausführungsbeispiel zu dem Streckenabschnitt 104.

Die bezogenen Bild- und/oder Videoinformationen werden mithilfe geeigneter Bildverarbeitungsverfahren auf mögliche Gefahren oder Hindernisse 106 entlang des Streckenverlaufs 104 untersucht. Eine Gefahr kann z. B. eine enge Fahrbahn oder eine Baustelle darstellen. Ein Hindernis kann z. B. ein Stau sein oder eine Stelle, die aufgrund der Höhe des Fahrzeugs nicht passiert werden kann.

Zusätzlich können bei der Analyse der Bildinformationen im Fahrzeug erfasste Informationen wie die Geschwindigkeit oder Wetterinformationen genutzt werden. Wetterinformationen können z. B. die Außentemperatur oder eine Niederschlagsinformationen aus dem Regensensor umfassen. So kann beispielsweise auf Brücken vor möglicher Glättebildung gewarnt werden, wenn die erfassten Wetterinformationen hierauf hindeuten oder es kann eine Warnung erfolgen, wenn eine für einen aus Sattelitenaufnahmen bekannte Kurvenverlauf überhöhte Geschwindigkeit festgestellt wurde.

Zusätzlich können Wetterinformationen über eine geeignete Schnittstelle 126 ebenfalls aus dem Internet bezogen werden und zur Analyse genutzt werden.

Sofern es sich bei den ausgewerteten Bild- und/oder Videoaufnahmen nicht um (Quasi)-Echtzeitinformationen handelt kann eine Plausibilisierung möglicher Warnungen anhand den Bildern oder Videos zugeordneten Aufnahmedaten erfolgen. Offensichtlich veraltete Informationen können dadurch gefiltert werden. Eine veraltete Information ist z. B. ein Fußgänger auf der Fahrbahn auf einem historischen Foto. Bei widersprüchlichen Ergebnissen mehrerer ausgewerteter Quellen werden dabei aktuelle Informationen priorisiert behandelt.

Wurden Gefahren oder Hindernisse 106 entlang der Strecke 104 entdeckt, so kann dem Führer des Fahrzeugs 100 über eine geeignete Mensch-Maschine-Schnittstelle (HMI) 114 eine Warnung gegeben werden. Eine solche Warnung kann z. B. ein akustisches Signal oder ein Einzeichnen von Gefahrenstellen auf der Karte des Navigationssystems 110 sein.

Darüber hinaus können die durch das Verfahren gewonnenen Informationen auch genutzt werden, um in das Fahrgeschehen aktiv, z. B. durch eine autonome Absenkung der Geschwindigkeit bei Gefahrenstellen 106, oder passiv, z. B. durch eine Änderung der Routenführung bei Hindernissen 106, einzugreifen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zur Analysierung eines von einem Fahrzeug (100) zu befahrenden Streckenabschnitts (104), das die folgenden Schritte umfasst:
Bestimmen (235) einer Gefahrenstelle (106) in dem von dem Fahrzeug (100) zu befahrenden Streckenabschnitt (104) unter Verwendung von Bilddaten, die von einer fahrzeugexternen Einrichtung (108) ausgesendete und über eine Fahrzeugschnittstelle (112) empfangene Daten repräsentieren.

2. Verfahren gemäß Anspruch 1, bei dem im Schritt des Bestimmens (235) unter Verwendung der Bilddaten ein Verlauf einer Fahrbahn des zu befahrenden Streckenabschnitts (104) und/oder ein sich in dem Streckenabschnitt befindliches Objekt ermittelt wird, um die Gefahrenstelle (106) zu bestimmen.

3. Verfahren gemäß einem der vorangegangenen Ansprüche, bei dem im Schritt des Bestimmens (235) die Gefahrenstelle (106) ferner unter Verwendung von Fahrzeugdaten bestimmt wird, wobei die Fahrzeugdaten von einer fahrzeuginternen Einrichtung (118, 122, 124) erfasste Daten repräsentieren.

4. Verfahren gemäß Anspruch 3, bei dem die Fahrzeugdaten Bewegungsdaten des Fahrzeugs und/oder Witterungsdaten über eine im Umfeld des Fahrzeugs (100) herrschende Witterung umfassen.

5. Verfahren gemäß einem der vorangegangenen Ansprüche, mit einem Schritt des Plausibilisierens der Bilddaten um plausibilisierte Bilddaten zu erhalten und bei dem im Schritt des Bestimmens (235) die Gefahrenstelle (106) unter Verwendung der plausibilisierten Bilddaten bestimmt wird.

6. Verfahren gemäß Anspruch 5, bei dem der Schritt des Plausibilisierens unter Verwendung eines Aufnahmezeitpunkts der Bilddaten durchgeführt wird.

7. Verfahren gemäß einem der vorangegangenen Ansprüche, mit einem Schritt des Ermittelns (231) von Positionsdaten bezüglich des zu befahrenden Streckenabschnitts (104), einem Schritt des Aussendens einer auf den Positionsdaten basierenden Anfrage nach den Positionsdaten zugeordneten Bilddaten über die Fahrzeugschnittstelle (112) und einem Schritt des Empfangens (233) der Bilddaten über die Fahrzeugschnittstelle.

8. Verfahren gemäß einem der vorangegangenen Ansprüche, mit einem Schritt des Erzeugens eines Gefahrensignals zur Darstellung der Gefahrenstelle mittels einer Mensch-Maschine-Schnittstelle (114) und/oder eines Steuersignals zur Steuerung einer Fahrfunktion des Fahrzeugs (100), basierend auf der Gefahrenstelle (106).

9. Vorrichtung (1002 zur Analysierung eines von einem Fahrzeug (100) zu befahrenden Streckenabschnitts (104), die ausgebildet ist, um die Schritte eines Verfahrens gemäß einem der Ansprüche 1 bis 8 durchzuführen.

10. Computer-Programmprodukt mit Programmcode zur Durchführung des Verfahrens nach einem der Ansprüche 1 bis 8, wenn das Programm auf einer Vorrichtung ausgeführt wird.
